# EUROPÄISCHE PATENTSCHRIFT

(11) **EP 2 066 220 B1**
(45) Veröffentlichungstag und Bekanntmachung des Hinweises auf die Patenterteilung: **16.05.2012**
(21) Anmeldenummer: 07803011.1
(22) Anmeldetag: 29.08.2007
(51) Int. Cl.: A47L 15/44

(54) **WASSERFÜHRENDES HAUSHALTSGERÄT MIT EINEM REINIGUNGSMITTELDOSIERSYSTEM SOWIE KARTUSCHE HIERFÜR**
WATER-CONDUCTING DOMESTIC APPLIANCE COMPRISING A DETERGENT DOSING SYSTEM AND CARTRIDGE THEREFOR
APPAREIL MÉNAGER ACHEMINANT DE L'EAU ET COMPRENANT UN SYSTÈME DE DOSAGE DE DÉTERGENT, ET CARTOUCHE APPROPRIÉE

(30) Priorität: 19.09.2006 DE 102006043916
(43) Veröffentlichungstag der Anmeldung: 10.06.2009
(73) Patentinhaber: BSH Bosch und Siemens Hausgeräte GmbH, 81739 München (DE)
(72) Erfinder: CLASSEN, Egbert, 86637 Wertingen (DE); JERG, Helmut, 89537 Giengen (DE)
(86) Internationale Anmeldenummer: PCT/EP2007/058994
(87) Internationale Veröffentlichungsnummer: WO 2008/034697

(56) Entgegenhaltungen:
- WO-A-02/29150
- DE-A1-102005 059 343
- DE-A1-102005 061 801

## Beschreibung

Die Erfindung betrifft ein wasserführendes Haushaltsgerät nach dem Oberbegriff des Patentanspruchs 1.

Die Mehrzahl der derzeit im Einsatz befindlichen wasserführenden haushaltsgerät, wie bspw. Haushalts-Geschirrspülmaschinen besitzt eine Zugabevorrichtung zur Aufnahme eines oder mehrerer Reinigungsmittel, welche im Verlauf eines Spülzyklus der Spülflotte zum Reinigen des in der Geschirrspülmaschine einsortierten Spülguts zugegeben werden. Üblicherweise wird das in der Zugabevorrichtung bevorratete Reinigungsmittel während des Spülzyklus vollständig in den Spülraum abgegeben und der darin umgewälzten Spülflotte beigemischt. Die Zugabevorrichtung ist von ihrer Größe her derart bemessen, dass gerade die für einen Spülzyklus benötigte Menge an Reinigungsmitteln eingefüllt werden kann. Der Benutzer der Geschirrspülmaschine ist deshalb gezwungen, zum Beginn jedes Spülzyklus die für den Spülzyklus benötigte Menge an Reinigungsmittel in die Zugabevorrichtung einzufüllen. Diese Handhabung ist für den Benutzer der Geschirrspülmaschine unbequem. Darüber hinaus besteht bei derartigen Geschirrspülmaschinen das Problem, dass die Menge an in die Zugabevorrichtung eingefüllten Reinigungsmitteln von Benutzer zu Benutzer, aber auch von Spülgang zu Spülgang variieren kann. Eine nicht korrekt dosierte Menge an Reinigungsmittel kann einerseits zu unbefriedigenden Spülergebnissen führen, wenn die Reinigungsmittel zu gering dosiert wurden, und andererseits eine Verschwendung an Reinigungsmitteln und damit eine Belastung der Umwelt zur Folge haben, wenn eine zu große Menge an Reinigungsmitteln dosiert wurde.

Zugabevorrichtungen, welche die darin gespeicherte Menge an Reinigungsmitteln auf einmal der Spülflotte zusetzen, lassen weiterhin die Durchführung komplexerer Spülprogramme nicht zu. So kann es beispielsweise in bestimmten Situationen sinnvoll sein, das Reinigungsmittel zu verschiedenen Zeitpunkten der Spülflotte zuzudosieren. Zugabevorrichtungen, welche zur Aufnahme einer einzigen Reinigungsmittel-Dosis ausgebildet sind, können derartige komplexe Spülzyklen nicht unterstützen.

Das Bevorraten einer solchen Menge an Reinigungsmittel, welche größer ist als die für einen Spülzyklus benötigte Menge, bringt das Problem mit sich, dass der nicht der Spülflotte zudosierte Teil des Reinigungsmittels bei jedem Spülzyklus hohen Temperaturen und hohen Temperaturunterschieden ausgesetzt ist. An die Langzeitstabilität des Reinigungsmittels zur Aufrechterhaltung der gewünschten Reinigungswirkung werden deshalb erhöhte Anforderungen gestellt.

In der WO 02/29150 A1 ist eine transportable und in eine Geschirrspülmaschine einstellbare Dosiereinrichtung gezeigt. Diese transportable Einheit hat ein erhebliches Gewicht in der Kilogramm-Größenordnung und eine große Kantenerstreckung von bis zu 30 Zentimetern. Zudem soll eine solche Dosiereinrichtung unabhängig von der Geschirrspülmaschine arbeiten können und auch über eine eigene Energieversorgung verfügen. Sogar das Einschalten kann manuell und ohne Kontakt zur Geschirrspülmaschine vorgenommen werden.

Es handelt sich somit bei der Dosiereinrichtung nach der WO 02/29150 um eine von der eigentlichen Spül- oder Waschmaschine vollständig unabhängige Einheit mit, wie oben beschrieben, erheblichen Ausmaßen und Gewicht, die, wie den Zeichnungen zu entnehmen ist, eine kastenförmige Umrlssgestalt hat. Durch eine solche Einrichtung geht viel Platz verloren. Insbesondere bei Geschirrkörben geht ein erheblicher Anteil des eigentlich für Geschirr zur Verfügung stehenden Raumes durch die externe Einheit der Dosiereinrichtung verloren.

Es ist daher Aufgabe der vorliegenden Erfindung, ein wasserführendes Haushaltsgerät, insbesondere eine Haushaltsgeschirrspülmaschine, derart weiterzubilden, dass bei einer raumsparenden Ausbildung des Reinigungsmitteldosiersystems die Langzeitstabilität der in dem Reinigungsmitteldosiersystem bevorrateten Reinigungsmittel sichergestellt ist. Ferner ist es Aufgabe der Erfindung, entsprechende Hilfsmittel bereitzustellen.

Diese Aufgabe wird durch ein wasserführendes Haushaltsgerät gemäß dem Patentanspruch 1 gelöst. Vorteilhafte Weiterbildungen sind in den Unteransprüchen 2 bis 43 angegeben.

Das erfindungsgemäße wasserführende Haushaltsgerät, insbesondere eine Haushalts-Geschirrspülmaschine, weist ein Reinigungsmitteldosiersystem auf, wobei das Reinigungsmitteldosiersystem einen Reinigungsmittelspender mit einem Aufnahmeraum zur Aufnahme wenigstens einer Kartusche aufweist, wobei die Kartusche zur Bevorratung wenigstens eines Reinigungsmittel ausgebildet ist. Erfindungsgemäß ist vorgesehen, dass das Reinigungsmitteldosiersystem fest in ein Bauteil der Geschirrspülmaschine integriert ist und dadurch nur einen minimalen Raum einnimmt. Dennoch weist zumindest ein schwenkbarer Deckel des Gehäuses dieses Systems, der gleichzeitig eine Gehäusewand des Reinigungsmitteldosiersystems ausbildet, wenigstens abschnittsweise eine Wärmeisolierung auf. Dabei kann das Reinigungsmitteldosiersystem zur mehrfachen Abgabe von wenigstens einem Reinigungsmittel ausgebildet sein. Das Reinigungsmitteldosiersystem ist zur Anordnung angrenzend bspw. an einen Spülraum der Geschirrspülmaschine im Inneren der Geschirrspülmaschine ausgebildet. "Angrenzend an einen Spülraum" bedeutet dabei, dass das Reinigungsmitteldosiersystem fest in einem Bauteil der Geschirrspülmaschine integriert ist. Das Reinigungsmitteldosiersystem kann wenigstens ein Reinigungsmittel bevorraten, bspw. flüssige oder gelförmige Reinigungsmittel. Dabei kann es sich bei dem Reinigungsmittel um ein Kombinationsprodukt aus einer Mehrzahl von Reinigungssubstanzen handeln oder um einzelne Reinigungssubtanzen, wie bspw. temperaturempfindliche Enzyme. Die bevorratete Menge jedes Reinigungsmittels ist größer als die für einen Spülzyklus benötigte Menge. Das Reinigungsmitteldosiersystem stellt, insbesondere nach Maßgabe bspw. einer Programmsteuereinheit der Geschirrspülmaschine, im Wesentlichen genau die Menge an Reinigungsmittel bereit, die für einen Spülzyklus notwendig ist. Hierzu kann das Reinigungsmitteldosiersystem mit einer Programmsteuereinheit der Geschirrspülmaschine in Verbindung stehen. Ferner kann die Programmsteuereinheit auch mit verschiedenen Sensoren in Verbindung stehen, wobei Anpassungen von Spülprogrammen, wie z.B. der Dosierung und Zusammensetzung von Reinigungsmitteln, als Antwort auf mit den Sensoren erfassten Messwerten erfolgen können.

Durch die Wärmeisolierung wird die Langzeitstabilität der in dem Reinigungsmitteldosiersystem bevorrateten Reinigungsmittel sichergestellt. Damit können solche Reinigungsmittel zum Einsatz kommen, welche temperaturempfindliche Substanzen aufweisen. Die Wärmeisolierung in dem zum Spülraum der Geschirrspülmaschine gerichteten Abschnitt unterbindet bzw. begrenzt übermäßig starke Temperaturschwankungen der in dem Reinigungsmitteldosiersystem bevorrateten Reinigungsmitteln. Diese Vorgehensweise ist insbesondere dann von Vorteil, wenn die bevorratete Menge an Reinigungsmitteln für eine sehr große Gesamtanzahl an Spülzyklen angelegt ist. Aufgrund des integralen Bestandteils des erfindungsgemäßen Reinigungsmitteldosiersystems der Geschirrspülmaschine kann die Isolierung an die von der Geschirrspülmaschine durchführbaren Spülzyklen und die dabei auftretenden Temperaturverläufe angepasst werden. Insbesondere können hierbei Abschnitte unterschiedlicher Isolationsfähigkeit vorgesehen sein.

[...] Der verschwenkbar an dem Reinigungsmittelspender gelagerte Deckel kann als separates Bauteil und damit unabhängig vom Rest des Reinigungsmitteldosiersystems z. B. aus einem anderen Material oder auf sonstige Weise mit einer Wärmeisolierung versehen werden.

Wenn durch Schließen des Deckels die Kartusche in ihre endgültige Position gedrückt wird, kommt dem integrierten Deckel eine weitere Funktion zu, so dass der Integrationsgrad weiter erhöht ist. Hierfür umfasst das Reinigungsmitteldosiersystem wenigstens eine Halteeinrichtung zur Halterung und Lagefixierung de wenigstens einen Kartusche. Dies erleichtert zudem einerseits das Einsetzen und Austauschen einer leeren Kartusche. Andererseits ist ein definierter Sitz einer Kartusche möglich, wodurch die Gefahr einer Fehlfunktion des Reinigungsmitteldosiersystems minimiert ist. In einer Kartusche kann wenigstens ein Reinigungsmittel bevorratet sein. Dabei erlaubt das Vorsehen der Wärmeisolierung in einer Gehäusewand des Reinigungsmittelspenders den Einsatz kostengünstiger Gehäusematerialien für eine Kartusche, bei welcher keine besonderen Vorkehrungen hinsichtlich einer Begrenzung eines Wärmestroms in Richtung der Reinigungsmittel vorgesehen zu werden brauchen.

Es kann weiterhin vorgesehen sein, dass die Aufnahme an dem Deckel wenigstens zwei L-förmig ausgebildete Haltelaschen aufweist, wobei jeweils erste Abschnitte der Haltelaschen sich in etwa senkrecht von einer Hauptfläche des Deckels weg erstrecken und an den von der Hauptfläche abgewandten Enden der ersten Abschnitte zu diesen in etwa senkrecht verlaufende zweite Abschnitte angeordnet sind, deren von den ersten Abschnitten abgewandte Enden einander zugewandt sind.

Gemäß einer weiteren Ausführungsform weist der Reinigungsmittelspender eine Positionierungseinrichtung für wenigstens eine Kartusche auf, die einen vorgegebenen Sitz der wenigstens einen Kartusche in dem Reinigungsmitteldosiersystem erzwingt, wenn die wenigstens eine Kartusche in dem Aufnahmeraum angeordnet ist. Durch die Positionierungseinrichtung der Kartusche kann sichergestellt werden, dass das Zudosieren des Reinigungsmittels unter allen Umständen bestimmungsgemäß funktioniert.

Die Wärmeisolierung in dem zum Spülraum der Geschirrspülmaschine gerichteten Abschnitt des Reinigungsmitteldosiersystems kann durch ein in dem Abschnitt angeordnetes Gasvolumen gebildet sein. Eine Herstellung ist durch das aus dem Stand der Technik bekannte Gasinnendruckverfahren (GID) möglich, bei dem ein Gashohlraum in den aus einem spritzfähigen Material, z.B. Kunststoff, hergestellten Abschnitt eingeschlossen wird. Die Wärmeisolierung kann auch durch ein in dem Abschnitt angeordnetes Isolatormaterial gebildet sein. Dieses Isolatormaterial kann zusätzlich zum Material des Gehäusebauteils vorhanden sein. Das Gehäusebauteil kann auch durch das Isolatormaterial gebildet sein. Es sind auch Kombinationen der genannten Materialien möglich.

Es kann vorgesehen sein, dass das Reinigungsmitteldosiersystem über zumindest einen mit dem Spülraum in operativer Verbindung stehenden Auslass verfügt, über den eine festgelegte Menge an Reinigungsmittel der Spülflotte während eines Spülzyklus zuführbar ist. Der zumindest eine Auslass kann an dem Reinigungsmittelspender vorgesehen sein. Denkbar ist jedoch auch, dass der zumindest eine Auslass an der Kartusche angeordnet ist.

Es ist zweckmäßig, wenn der wenigstens eine Auslass an einem Gehäuseabschnitt des Reinigungsmittelspenders vorgesehen ist, der in Schwerkraftrichtung unterhalb des Aufnahmeraums angeordnet ist. Dabei ist eine Anzahl an Auslässen vorgesehen, die der Anzahl der in der Kartusche bevorrateten Reinigungsmittel oder der Anzahl der Kammern der Kartusche entspricht.

Gemäß einer weiteren Ausgestaltung ist eine der Anzahl der Auslässe entsprechende Anzahl an Dosierkammern vorgesehen. Der wenigstens eine Auslass des Reinigungsmitteldosiersystems mündet in eine der Dosierkammern, die mit dem Reinigungsmittel in operativer Verbindung steht.

Das Reinigungsmitteldosiersystem kann eine Fördereinrichtung umfassen, mit der das Reinigungsmittel aus der Kartusche dem Spülraum zuführbar ist. Dabei ist es zweckmäßig, wenn die Fördereinrichtung in der Dosierkammer angeordnet ist.

Die Dosierung des wenigstens einen Reinigungsmittels kann in einer Variante durch eine Pumpe vorgenommen werden. In einer anderen Variante erfolgt die Abgabe des wenigstens einen Reinigungsmittels über die Schwerkraft und die Dosierung über die Festlegung einer Auslaufzeit, in der das wenigstens eine Reinigungsmittel durch Öffnen eines öffenbaren Verschlusses zur weiteren Verarbeitung aus der Kartusche ausleitbar sind. In dieser Variante ist der öffenbare Verschluss in Schwerkraftrichtung unten angeordnet, wenn die Kartusche sich in Einbaulage in dem Reinigungsmitteldosiersystem befindet.

Gemäß einer weiteren Ausführungsform weist das Reinigungsmitteldosiersystem zumindest eine weitere Kammer für ein festes Reinigungsmittel auf. Das Vorsehen einer weiteren Kammer für ein festes Reinigungsmittel weist den Vorteil auf, dass der Betrieb der Geschirrspülmaschine auch dann sichergestellt werden kann, wenn die Kartusche keine Reinigungsmittel mehr enthält und der Benutzer keine weitere gefüllte Kartusche zur Hand hat.

Das Reinigungsmitteldosiersystem ist gemäß einer Variante in einer Seitenwand des Spülraums zwischen einem Oberkorb und einem Unterkorb der Geschirrspülmaschine angeordnet. Alternativ kann das Reinigungsmitteldosiersystem an einer gegenüber dem Spülraum verschwenkbar ausgebildeten Tür der Geschirrspülmaschine angeordnet sein. Das Reinigungsmitteldosiersystem ist hierbei integraler Bestandteil der Geschirrspülmaschine. Die Ausbildung erfolgt auch in dieser Variante an der Tür derart, dass bei geöffneter Tür eine Bestückung des Reinigungsmittelspenders mit der Kartusche von der Stirnseite der Tür her erfolgt. Die Bestückung kann dabei im Bereich einer Blende der Tür oder einer Innentür der Tür der Geschirrspülmaschine erfolgen.

Zur Erfindung gehört ferner eine Kartusche, die für den Einsatz in einer erfindungsgemäßen Geschirrsspülmaschine mit einem Reinigungsmitteldosiersystem ausgebildet ist. Dabei weist die Kartusche ein Gehäuse zur Aufnahme wenigstens eines Reinigungsmittels auf, wobei die bevorratete Menge an Reinigungsmitteln größer als die für einen Spülzyklus benötigte Menge ist. Das Gehäuse kann Seitenwände sowie Boden und Deckel aufweisen. Erfindungsgemäß weist die Kartusche eine Wärmeisolierung auf, die einen Wärmestrom vom Spülraum einer Geschirrspülmaschine in Richtung des Reinigungsmitteldosiersystems begrenzt. Die erfindungsgemäße Kartusche weist die gleichen Vorteile auf, wie sie vorstehend in Verbindung mit dem Reinigungsmitteldosiersystem erläutert wurden.

Die Wärmeisolierung kann durch ein in dem Abschnitt angeordnetes Gasvolumen, z. B. hergestellt mit dem Gasinnendruckverfahren, oder durch ein in dem Abschnitt angeordnetes Isolatormaterial gebildet sein. Dieses kann zusätzlich zum Gehäusematerial der Kartusche vorhanden sein. Der Gehäuseabschnitt der Kartusche kann auch durch das Isolatormaterial selbst gebildet sein.

Die Kartusche enthält gemäß einer Ausführungsform wenigstens ein Reinigungsmittel. Die Reinigungsmittel können in einer Mehrzahl an Kammern der Kartusche angeordnet sein. Das Bevorraten unterschiedlicher Reinigungsmittel in unterschiedlichen Kammern weist den Vorteil auf, dass in einem bestimmten Abschnitt eines Spülzyklus lediglich dasjenige Reinigungsmittel zudosiert werden zu braucht, welches für diesen Spülabschnitt tatsächlich notwendig ist. Selbstverständlich ist es möglich, dass während eines bestimmten Abschnitts eines Spülzyklus auch mehrere der Reinigungsmittel gleichzeitig zudosiert werden. Sofern zwei voneinander unterschiedliche Reinigungsmittel grundsätzlich gleichzeitig zur Spülflotte während eines Spülzyklus zugegeben werden, ist es auch möglich, diese Reinigungsmittel in einer gemeinsamen Kammer der Kartusche anzuordnen.

Das Volumen des wenigstens einen Reinigungsmittels ist gemäß einer weiteren Ausführungsform derart bemessen, dass als Gesamtzahl an Spülzyklen zwischen 20 und 40, bevorzugt 30 Spülzyklen durchführbar sind. Bevorzugt sind die Volumina der einzelnen Reinigungsmittel derart bemessen, dass mit dem letzten Spülzyklus alle der in der Kartusche bevorrateten Reinigungsmittel aufgebraucht sind.

Eine weitere Ausführungsform sieht vor, dass die Kartusche wenigstens eine Fördereinrichtung umfasst, mit der Reinigungsmittel in den Spülraum einer Geschirrspülmaschine förderbar ist. Diese Vorgehensweise hat zur Folge, dass der Reinigungsmittelspender des erfindungsgemäßen Reinigungsmitteldosiersystems konstruktiv besonders einfach ausgestaltet werden kann. Die notwendigen Vorrichtungen, um die in der Kartusche vorgehaltenen Reinigungsmittel in den Spülraum zu dosieren, sind gemäß dieser Ausführungsform ausschließlich in der Kartusche vorgehalten. Dabei kann vorgesehen sein, dass eine der Anzahl der Reinigungsmittel oder Kammern entsprechende Anzahl an Fördereinrichtungen vorgesehen ist.

Um ein falsches Einlegen der Kartusche in den Reinigungsmittelspender zu unterbinden, verfügt das Gehäuse der Kartusche über eine mechanische Codierung, die bspw. Durch Vorsprünge oder Führungen gebildet ist. Die Codierung ist derart ausgestaltet, dass sich die Kartusche lediglich auf eine einzige Weise - die vorbestimmte Weise - in den Reinigungsmittelspender einsetzen lässt.

Die Kartusche kann jede geeignete Form aufweisen. Vorzugsweise ist jedoch vorgesehen, dass das Gehäuse der Kartusche eine Längserstreckung entlang einer Hauptachse aufweist. Hierbei kann es sich z.B. um einen quarderförmigen Grundkörper mit einer Längsachse, bspw. entlang der Breite, handeln, die wesentlich länger als alle anderen Achsen (entlang der Tiefe und der Höhe) ist. Es kann sich aber auch um einen kegel-, kegelstumpf-, zylinder-, pyramiden- oder pyramidenstumpfförmigen Grundkörper mit einer Hauptachse handeln.

Dabei ist vorzugsweise, dass die Hauptachse länger als Nebenachsen des Gehäuses mit einer der oben genannten Grundform der Kartusche ist, z.B. um den Faktor mindestens 1,5. Ferner kann der Grundkörper vorzugsweise eine Erstreckung entlang einer ersten Nebenachsen aufweisen, z.B. entlang der Höhe, und eine Erstreckung entlang einer zweiten Nebenachse, z.B. entlang der Tiefe, aufweisen, wobei die Erstreckung entlang der erste Nebenachse wesentlich länger als die Erstreckung entlang der zweiten Nebenachse ist, z.B. um den Faktor 5 bis 10, vorzugsweise 5. Eine besonders gute Handhabung der Kartusche und ein zweckmäßiges Volumen jeweiliger Reinigungsmittel ergeben sich dann, wenn das Gehäuse der Kartusche eine quarderförmige Grundform mit eine Tiefe von etwa 25 mm, eine Breite von etwa 200 mm und eine Höhe von etwa 125 mm aufweist. Insbesondere lassen sich bei derartigen Abmaßen die bevorzugte Gesamtzahl z von Spülzyklen zwischen 20 und 40, bevorzugt 30, Spülzyklen realisieren.

In einer bevorzugten Weiterbildung ist vorgesehen, dass die Kammern der Kartusche entlang der Hauptachse nebeneinander angeordnet sind. D.h., dass bei einer Kartusche mit quarderförmiger Grundform und sich in Richtung der Breite erstreckender Hauptachse die Einteilung in Kammern zu Kammerabmessungen führt, bei der die Abmessung einer Kammer ein der Anzahl der Kammern entsprechender Anteil der Breite ist, während für aller Kammer eine gleich Tiefe und Höhe gegeben ist.

Gemäß einer weiteren Ausführungsform ist die Kartusche mit einem öffenbaren Verschluss versehen, der beim Einsetzen in das Reinigungsmitteldosiersystem, insbesondere selbsttätig, öffenbar und beim Entnehmen der Kartusche aus dem Reinigungsmitteldosiersystem, insbesondere selbsttätig, schließbar ist. Der öffenbare Verschluss kann z. B. durch eine Membran, eine Folie oder einen Elastomer gebildet sein. Der Verschluss dient während der Lagerung und des Transports dazu, dass das in der Kartusche bevorratete Reinigungsmittel nicht unbeabsichtigt auslaufen kann. Das Öffnen des Verschlusses erfolgt in dem Moment, in dem die Kartusche in den Reinigungsmittelspender des Reinigungsmitteldosiersystems eingesetzt wird, so dass während des weiteren Betriebs der Geschirrspülmaschine eine Zudosierung des Reinigungsmittels zur Spülflotte möglich ist. Je nach konstruktivem Aufbau der Kartusche kann die Anzahl der Verschlüsse variieren. Zweckmäßigerweise ist eine der Anzahl der Kammern der Kartusche entsprechende Anzahl an Verschlüssen vorgesehen, die Anzahl der Verschlüsse kann auch der Anzahl der Reinigungsmittel in der Kartusche entsprechen. Der öffenbare Verschluss kann z.B. in Schwerkraftrichtung unten, d.h. am Boden der Kartusche, angeordnet sein, wenn die Kartusche sich in Einbaulage in dem Reinigungsmitteldosiersystem befindet. Hierdurch wird das vollständige Entleeren der Kartusche durch die Fördereinrichtung erleichtert, wodurch kein Reinigungsmittel in der Kartusche ungenutzt verbleibt.

Der öffenbare Verschluss ist gemäß einer weiteren Ausführungsform beim Einsetzen der Kartusche in das Reinigungsmitteldosiersystem korrespondierend zu einer Kanüle angeordnet, so dass der Verschluss von dieser durchdrungen wird. Die Kanüle ist ortsfest in dem Reinigungsmittelspender vorgesehen und stellt eine Verbindung zu der Dosierkammer her.

Vorzugsweise ist vorgesehen, dass wenigstens eine der Kammern wenigstens eine der folgenden Inhaltstoffe aufweist: Alkaliträger, z.B. Lauge, Komplexier- und Dispergierstoffe; z.B. Polymere; Enzyme wie Amylase, Protease oder Lipase; Bleichmittel, z.B. Wasserstoffperoxid; Bleichaktivator, und Tenside, wie z.B. nichtionische Tenside. Ferner kann zusätzlich eine biozidwirkende Flüssigkeit bevorratet werden. Insbesondere können Biozide gegen Bakterien (Bakterizide), gegen Pilze (Fungizide), gegen Keime (Mikrobizide), gegen Viren (Viruzide) und auch gegen Algen (Algizide) bevorratet werden, deren Zugabe unangenehme Geruchsentwicklungen durch z.B. Biofilmbildung während längerer Standzeiten zu unterbindet.

Ferner gehört zur Erfindung ein Reinigungsmitteldosiersystem.

Die Erfindung wird nachfolgend anhand der Figuren näher erläutert. Es zeigen:
- Fig. 1: eine erfindungsgemäße Geschirrspülmaschine mit einem Reinigungsmitteldosiersystem, welches in einer Behälterwand angeordnet ist,
- Fig. 2: eine weitere erfindungsgemäße Geschirrspülmaschine mit einem Reinigungsmitteldosiersystem, welches in der Tür der Geschirrspülmaschine angeordnet ist,
- Fig. 3: eine Draufsicht auf ein erfindungsgemäßes Reinigungsmitteldosiersystem zur Anordnung in der Behälterwand der Geschirrspülmaschine,
- Fig. 4: einen Querschnitt durch das in Fig. 3 gezeigte Reinigungsmitteldosiersystem,
- Fig. 5: einen Schnitt durch ein in der Tür der Geschirrspülmaschine angeordnetes Reinigungsmitteldosiersystem,
- Fig. 6: ein Ausführungsbeispiel einer Kartusche zur Verwendung in einem erfindungsgemäßen Reinigungsmitteldosiersystem, und
- Fig. 7: einen Schnitt durch ein erfindungsgemäßes Reinigungsmitteldosiersystem, wobei eine in einer Dosierkammer angeordnete Fördereinrichtung dargestellt ist, mit welcher Reinigungsmittel aus der Kartusche dem Spülraum der Geschirrspülmaschine zuführbar ist.

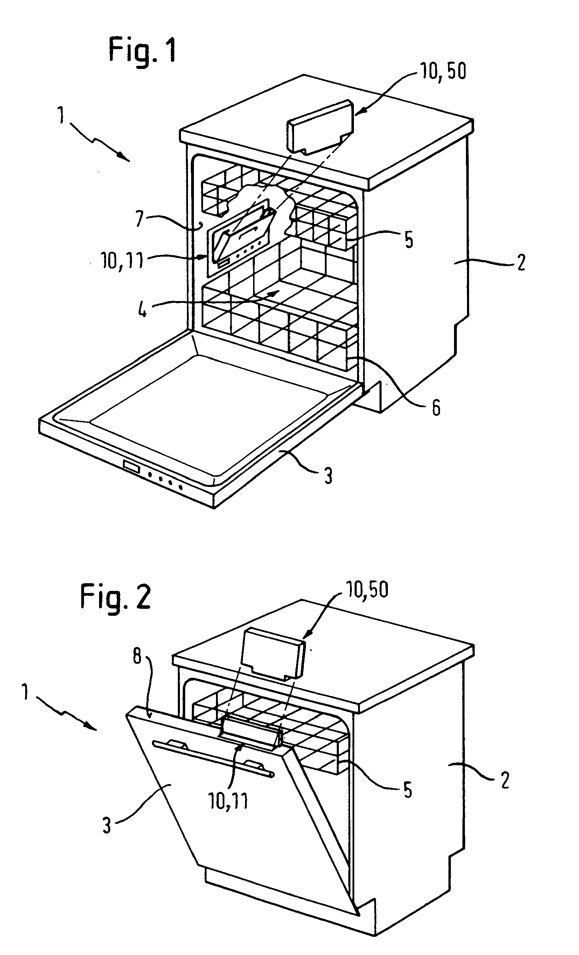

Fig. 1 zeigt eine erfindungsgemäße Geschirrspülmaschine 1, die eine verschwenkbar an einem Gehäuse 2 gelagerte Tür 3 aufweist. Die Tür 3 ist in der Figur in ihrer geöffneten Stellung dargestellt. In einem durch die Tür 3 verschließbaren Spülraum 4 sind in bekannter Weise Geschirrkörbe 5, 6 angeordnet. Ein Reinigungsmitteldosiersystem 10, umfassend einen Reinigungsmittelspender 11 und eine Kartusche 50, welche zumindest zwei getrennt voneinander bevorratete Reinigungsmittel enthält, ist in einer Behälterwand 7 des Gehäuses 2 angeordnet. Fig. 1 zeigt die dabei bevorzugte Anordnung des Reinigungsmitteldosiersystems 10 zwischen dem Oberkorb 5 und dem Unterkorb 6. Der die Kartusche 50 aufnehmende Reinigungsmittelspender 11 ist dabei in einem der Türöffnung nahe gelegenen Abschnitt der Behälterwand 7 angeordnet, um das Einführen und Entnehmen der Kartusche 50 in bzw. aus dem Reinigungsmittelspender 11 für den Benutzer zu erleichtern.

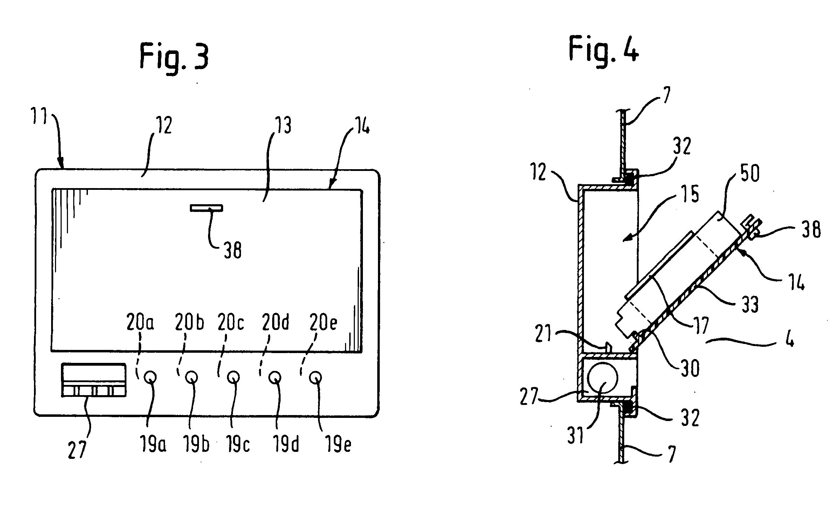

In den Fig. 3 und 4 ist eine Draufsicht und ein Querschnitt durch das Reinigungsmitteldosiersystem 10, wie es in der Geschirrspülmaschine nach Fig. 1 zum Einsatz kommt, dargestellt. Fig. 3 zeigt den in der Behälterwand angeordneten Reinigungsmittelspender 11. Dieser umfasst ein Gehäuse 12 und einen gegenüber dem Gehäuse 12 verschwenkbar gelagerten Deckel 14. Befindet sich der Deckel 14, wie in Fig. 4 dargestellt, in seiner Öffnungsposition, so kann die Kartusche 50 vom Spülraum 4 her in den Deckel 14 eingelegt werden. Der Deckel 14 verfügt zur Halterung und Fixierung über zwei symmetrisch angeordnete Haltelaschen 17, welche eine L-förmige Gestalt aufweisen und an die Größe der Kartusche 50 angepasst sind, so dass die Haltelaschen 17 die Kartusche 50 nach dem Einlegen haltend umgreifen. An dem Deckel 14 ist ferner eine Auflagefläche 30 angeformt, so dass die Kartusche 50 in einer definierten Position zum Liegen kommt. Durch das Schließen des Deckels 14 wird die Kartusche in einen Aufnahmeraum 15 des Reinigungsmittelspenders 11 eingebracht und durch gegebenenfalls vorhandene Nasen und/oder Vorsprünge am Gehäuse des Reinigungsmittelspenders in ihre endgültige Position gedrückt.

Wie aus der Querschnittsdarstellung der Figur 4 gut zu ersehen ist, weist der Außenumfang des Gehäuses 12 des Reinigungsmittelspenders 11 einen Umbug auf. Der Umbug dient zur Aufnahme einer Dichtung 32, welche zwischen dem Umbug und der Behälterwand 7 eingelegt ist. Auf diese Weise wird das Eindringen von Wasser oder Feuchtigkeit in Richtung der Rückseite der Behälterwand 7 verhindert.

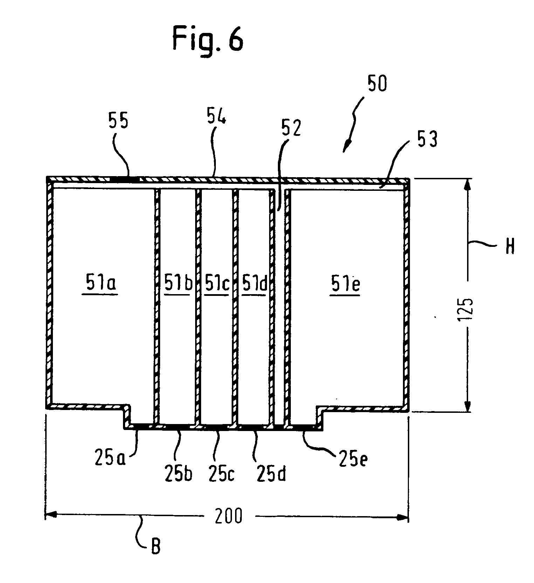

Eine beispielhafte Ausgestaltung der Kartusche 50 ist in Fig. 6 dargestellt. Die Kartusche 50 weist lediglich beispielhaft fünf Kammern 51a, 51b, 51c, 51d und 51e auf, zur Aufnahme jeweils eines Reinigungsmittels oder eines Reinigungsmittelgemisches. Die Größe der einzelnen Kammern 51a bis 51e ist dabei bevorzugt entsprechend dem während einer vorgegebenen Anzahl an Spülzyklen notwendigen Volumen dimensioniert. Bevorzugt ist das Volumen der verschiedenen Reinigungsmittel in den Kammern 51a bis 51e derart bemessen, dass nach einer bestimmten Anzahl an Spülzyklen, bevorzugt zwischen 20 und 40, weiter bevorzugt ca. 30, sämtliche der Kammern 51a bis 51e vollständig entleert sind. Jede der Kammern 51a bis 51e ist mit einem öffenbaren Verschluss 25a bis 25e in Form einer Membran versehen. Die z.B. aus einem Gummi bestehende Membran schließt die einzelnen Kammern 51a bis 51e dichtend ab, so dass während der Lagerung und des Transports der Kartusche 50 kein Reinigungsmittel aus diesen entweichen kann. Beim Einsetzen der Kartusche 50 in den Reinigungsmittelspender 11 werden die Membranen von korrespondierend in dem Reinigungsmittelspender 11 angeordneten Kanülen 21 (vgl. Fig. 4) durchstochen, so dass nach Maßgabe einer entsprechenden Dosiervorrichtung Reinigungsmittel in den Spülraum zugegeben werden kann.

Die Kartusche ist bevorzugt aus einem Kunststoff gefertigt und weist eine Breite B von ca. 200 mm, eine Höhe H von ca. 125 mm und eine Tiefe von ca. 25 mm auf. Bei diesen Abmaßen lässt sich das Volumen der verschiedenen Kammern derart bemessen, dass die gewünschten 20 bis 40 Spülzyklen mittels einer Kartusche durchführbar sind.

Neben den Kammern 51 a bis 51 e verfügt die Kartusche 50 über eine weitere Kammer 52, welche mit einem oder mehreren Belüftungskanälen 53 in Verbindung steht. Der oder die Belüftungskanäle 53 ihrerseits weisen eine Verbindung zu den verschiedenen Kammern 51a bis 51e auf. Auf diese Weise ist sichergestellt, dass mit zunehmender Entleerung der Kammern 51a bis 51e sich kein Unterdruck in diesen aufbauen kann, wodurch das Zugeben von Reinigungsmitteln erschwert oder verfälscht würde. Die Belüftungskanäle 53 befinden sich bevorzugt in einem Deckel 54, welcher nach dem Befüllen der einzelnen Kammern 51a bis 51e mit den jeweiligen Reinigungsmitteln auf das Gehäuse der Kartusche aufgebracht ist. Der Deckel 54 kann ein Überdruckventil 55 aufweisen, welches gegebenenfalls bei bestimmten Reinigungsmittelkomponenten notwendig ist.

Da die in der Kartusche 50 enthaltenen Reinigungsmittel erst nach und nach im Rahmen einer Mehrzahl von Spülzyklen dem Spülraum, genauer der in dem Spülraum umgewälzten Spülflotte, zudosiert werden, sind diese mit jedem Spülzyklus beträchtlichen absoluten Temperaturen und Temperaturschwankungen ausgesetzt. Um zu verhindern, dass die Eigenschaften der Reinigungsmittel sich aufgrund dessen mit der Zeit verändern, ist zumindest eine zum Spülraum hin gerichtete Gehäusewand der Kartusche 50 und/oder der zum Spülraum hin gerichtete Deckel 14 des Reinigungsmitteldosiersystems 10 aus einem isolierenden Material gefertigt oder aber mit einer Isolation 33 umgeben. Hierdurch wird ein Wärmestrom vom Spülraum in Richtung des Reinigungsmitteldosiersystems bzw. der in der Kartusche bevorrateten Reinigungsmittel begrenzt, so dass die Langzeitstabilität der verwendeten Reinigungsmittel gewährleistet ist. Die Isolation 33 kann durch ein in dem Deckel oder dem betreffenden Gehäuseabschnitt der Kartusche angeordnetes Gasvolumen gebildet sein. Dieses die Isolation erzeugende Gasvolumen kann im Rahmen der Fertigung des Deckels bzw. der Kartusche eingebracht werden. Das hierbei verwendete Verfahren ist als Gasinnendruckverfahren (GID) bekannt.

In der nachfolgenden Beschreibung wird wiederum auf die Fig. 3 und 4 Bezug genommen. Neben der Aufnahme für die Kartusche weist der Reinigungsmittelspender 11 eine weitere Kammer 27 zur Aufnahme eines festen Reinigungsmittels auf. Bei dem festen Reinigungsmittel kann es sich beispielsweise um einen 3-in-1-Tab handeln, welcher in die weitere Kammer 27 eingelegt wird, wenn in dem Aufnahmeraum 15 keine oder eine leere Kartusche 50 enthalten ist. Das Vorsehen der weiteren Kammer 27 zur Aufnahme eines festen Reinigungsmittels ermöglicht es, die Geschirrspülmaschine auch dann zu nutzen, wenn die Kartusche 50 leer ist und keine gefüllte Kartusche verfügbar ist.

Das Reinigungsmitteldosiersystem kann zur Detektion einer leeren oder nahezu leeren Kartusche über Mittel zur Abfrage des Füllstandes der Reinigungsmittel in der Kartusche verfügen. Erreicht das Reinigungsmittel in einer oder mehreren der Kammern der Kartusche einen vorgegebenen Füllstand, z.B. wenn eine vorgegebene Anzahl an Spülzyklen noch möglich ist, so kann dies dem Nutzer über ein optisches Signal dargestellt werden. Die Anzeigevorrichtung kann sich in bekannter Weise z.B. an der Außenseite der Tür, z.B. der Blende, befinden.

Die Abfrage des Füllstandes kann auf optische, kapazitive oder akustische Weise erfolgen. Bei einer optischen Abfrage könnte in die Kartusche ein Lichtleiter eingebracht sein, der über eine in dem Reinigungsmittelspender vorhandene Lichtquelle den Füllstand abfragt. Bei einer kapazitiven Abfrage kann das in der Kartusche vorhandene Reinigungsmittel als Dielektrikum herangezogen werden. Eine akustische Kupplung kann unter Ausnutzung des Piezo-Ultraschallprinzips erfolgen. Alternativ kann ein Zählwerk zum Zählen der bereits durchlaufenen Spülzyklen einer vollen Kartusche eingesetzt werden. Zur Erkennung einer neuen Kartusche können diese mit einem durch die Geschirrspülmaschine oder den Reinigungsmittelspender auslesbaren Transponder versehen sein. Alternativ kann ein anderer Code, z.B. ein Bar-Code an der Kartusche angebracht sein. Das Einlesen des Codes kann beim Einsetzen der Kartusche in den Reinigungsmittelspender erfolgen.

Die weitere Kammer 27 weist, wie dies aus Fig. 4 ersichtlich ist, eine Öffnung 31 auf, welche mit der Umgebung der Geschirrspülmaschine in Verbindung steht. Die Öffnung 31 kann zu diesem Zweck über in den Figuren nicht gezeigten Kanälen, welche auf der Rückseite der Behälterwand 7 verlaufen, mit der Umgebung verbunden sein. Das Reinigungsmitteldosiersystem integriert damit die Funktionalität einer so genannten "Expansionsöffnung", welche zur Ableitung des im Spülraum entstehenden Überdrucks dient, wenn die Geschirrspülmaschine z. B. während eines Spülzyklus mit bereits erwärmter Spülflotte durch den Benutzer geöffnet und wieder geschlossen wird. Der in diesem Moment entstehende Überdruck kann dann über die weitere Kammer 27 und die Öffnung 31 zur Umgebung hin abgeleitet werden.

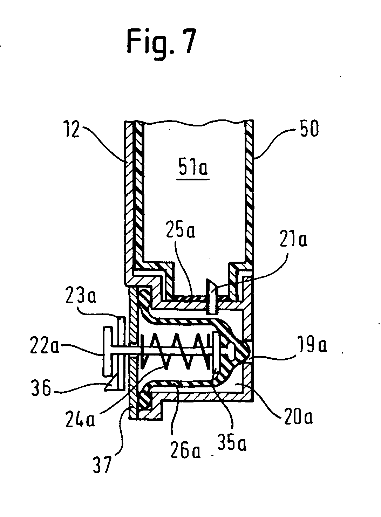

Im Gehäuse 12 des Reinigungsmittelspenders 11 sind weiterhin Auslässe 19a bis 19e vorgesehen. Die Auslässe 19a bis 19e münden jeweils in eine Dosierkammer 20a bis 20e, wobei in der Querschnittsdarstellung der Fig. 7 nur die Dosierkammer 20a zu erkennen ist. Die Dosierkammer 20a steht über die Kanüle 21 a mit der Kammer 51a der Kartusche in Verbindung.

In jeder der Dosierkammern 20a bis 20e ist eine Fördereinrichtung angeordnet, welche im vorliegenden Ausführungsbeispiel aus einer in der Dosierkammer 20a beweglich gelagerten Dichtung 26a und einem Antriebsmechanismus für die Dichtung 26a besteht. Die Dichtung 26a ist derart geformt, dass diese zwischen einer den zugehörigen Auslass (in der Figur 19a) verschließenden und den Auslass freigebenden Stellung bewegbar ist. Zu diesem Zweck ist die Dichtung 26a mit einem mit einem Ventilbetätigungshebel 23a in Wirkverbindung stehenden Ventilstößel 22a verbunden. Bei Betätigung des Ventübetätigungshebels 23a wird die Dichtung 26a von dem Auslass 19a weg entfernt. Wird der Ventilbetätigungshebel 23a in seine Ausgangsstellung zurück bewegt, so wird durch eine zwischen einer Gehäuseabdeckung 37 und einem an dem Ventilstößel 22a vorgesehenen Widerlager 35a eingespannten Feder 24a eine Rückstellkraft aufgebaut, welche die Dichtung 26a innig an den Auslass 19a anlegt.

Befindet sich die Dichtung 26a in ihrer Öffnungsstellung, so kann das in der Kammer 51 a befindliche Reinigungsmittel aufgrund der Schwerkraft oder einer aktiven Fördereinrichtung, wie z. B. einer Pumpe, durch die Kanüle 21 a in die Dosierkammer 20 und über den Auslass 19a in den Spülraum gelangen.

Das Fördern des Reinigungsmittels kann dabei entweder ausschließlich unter Ausnutzung der Schwerkraft erfolgen. Die Fördereinrichtung, insbesondere die Ausgestaltung der Dichtung kann jedoch auch nach dem Prinzip einer Pumpe aufgebaut sein, so dass durch einen entsprechenden Unterdruck Reinigungsmittel aus der Reinigungskammer 21a in die Dosierkammer 20a und durch einen entsprechenden Überdruck aus der Dosierkammer 20a in den Spülraum gefördert werden.

Fig. 2 zeigt eine weitere Geschirrspülmaschine 1 mit einem erfindungsgemäßen Reinigungsmitteldosiersystem 10. Im Gegensatz zu dem vorher beschriebenen Ausführungsbeispiel ist das Reinigungsmitteldosiersystem 10, genauer der Reinigungsmittelspender 11 in der Tür 3 der Geschirrspülmaschine angeordnet. Das Bestücken des Reinigungsmittelspenders 11 mit der Kartusche 50, die im Übrigen identisch wie in Verbindung mit Fig. 6 beschrieben ausgebildet sein kann, erfolgt von der Stirnseite 8 der Tür her. Die Öffnung zum Bestücken des Reinigungsmittelspenders 11 kann dabei im Bereich einer Blende der Geschirrspülmaschine oder der Innentür der Tür angeordnet sein. Der Vorteil der Anordnung gemäß Fig. 2 besteht in einem bequemeren Einsetzen und Entnehmen der Kartusche für den Benutzer.

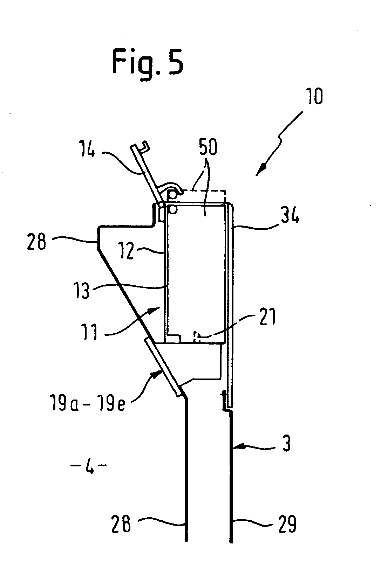

In der Querschnittsdarstellung der Fig. 5 ist die Ausgestaltung des Reinigungsmitteldosiersystems 10 genauer dargestellt. Es ist ein Schnitt durch die Tür 3 der in Fig. 2 gezeigten Geschirrspülmaschine dargestellt, Der Reinigungsmittelspender 11 ist zwischen einer Blende 34 und einer Innentür 28 angeordnet. Die Blende 34 grenzt in bekannter Weise an die von außen für den Benutzer sichtbare Außentür 29 an. Der Reinigungsmittelspender 11 verfügt im Bereich seiner Stirnseite über einen Deckel 14, der verschwenkbar an dem Gehäuse 12 des Reinigungsmittelspenders 11 gelagert ist. Der Deckel 14 weist zwei Rasthaken auf, von denen derjenige, welcher der Verschwenkachse näher gelegen ist, in einen an der Kartusche 50 angeformten Vorsprung eingreift. Beim Verschwenken des Deckels bewirkt dies ein leichtes Anheben der Kartusche 50 zur leichteren Entnahme für den Benutzer. Der von der Verschwenkachse weiter entfernt liegende Rasthaken dient zum Verrasten des Deckels 14 mit dem Gehäuse 12.

Beim Verschließen des Deckels 14 und eingesetzter Kartusche 50 wird diese durch den Deckel und die Relativbewegung des Rasthakens und Vorsprungs an der Kartusche 50 nach unten gedrückt, so dass die in dem Reinigungsmittelspender 11 vorgesehenen Kanülen die in der Kartusche 50 korrespondierend angeordneten Membranen 25a bis 25e durchstoßen. Unterhalb der Kanüle 21 ist, wie dies in Verbindung mit Fig. 7 beispielhaft beschrieben wurde, jeweils eine Dosierkammer angeordnet, die mit korrespondierenden Auslässen 19a bis 19e mit dem Spülraum in Verbindung steht.

Die mit dem Bezugszeichen 13 gekennzeichnete Gehäusewand des Reinigungsmittelspenders und/oder die an diese Wand angrenzende Gehäusewand der Kartusche 50 sind zur Begrenzung eines Wärmestroms vom Spülraum in Richtung des Reinigungsmitteldosiersystems bzw. der in der Kartusche befindlichen Reinigungsmittel mit einer, wie oben beschriebenen, Isolation ausgestattet.

Die vorliegende Erfindung schafft eine Geschirrspülmaschine, welche die Handhabung für ihren Benutzer erleichtert und gleichzeitig, unabhängig von der Menge an in dem Reinigungsmitteldosiersystem bevorrateten Reinigungsmittel eine Langzeitstabilität der Reinigungsmittel sicherstellt, so dass die gewünschte Reinigungswirkung bestimmungsgemäß erreicht wird.

### Bezugszeichenliste

- 1: Geschirrspülmaschine
- 2: Gehäuse
- 3: Tür
- 4: Spülraum
- 5: Geschirrkorb
- 6: Geschirrkorb
- 7: Behälterwand
- 8: Stirnseite der Tür
- 10: Reinigungsmitteldosiersystem
- 11: Reinigungsmittelspender
- 12: Gehäuse
- 13: Gehäusewand
- 14: Deckel
- 15: Aufnahmeraum
- 16: Haltevorrichtung
- 17: Haltelasche
- 18: Schwenkmechanismus
- 19a-19e: Auslass
- 20a-20e: Dosierkammer
- 21a-21e: Kanüle
- 22a-22e: Ventilstößel
- 23a-23e: Ventilbetätigungshebel (Drehscheibe)
- 24a-24e: Feder
- 25a-25e: Membran
- 26a-26e: Dichtung
- 27: Kammer für festes Reinigungsmittel
- 28: Innentür
- 29: Außentür
- 30: Anschlag/Auflagefläche
- 31: Öffnung
- 32: Dichtung
- 33: Isolation
- 34: Blende
- 35a-35e: Widerlager
- 36: Vorsprung
- 37: Abdeckung
- 50: Kartusche
- 51a-51e: Kammer für Reinigungsmittel
- 52: Kammer für Entlüftung
- 53: Belüftungskanal
- 54: Deckel
- 55: Überdruckventil
- H: Höhe
- B: Breite

## Patentansprüche

1. Wasserführendes Haushaltsgerät, insbesondere Haushalts-Geschirrspülmaschine, mit einem Reinigungsmitteldosiersystem (10), das einen Reinigungsmittelspender (11) mit einem Aufnahmeraum (15) zur Aufnahme wenigstens einer Kartusche (50) aufweist, wobei die Kartusche (50) zur Bevorratung wenigstens eines Reinigungsmittels ausgebildet ist,
**dadurch gekennzeichnet, dass**
der Reinigungsmittelspender (11) ein Gehäuse (12) mit einem schwenkbar daran gelagerten Deckel (14) umfasst, wobei das Reinigungsmitteldosiersystem (10) fest in ein Bauteil des Haushaltgeräts integriert ist und wenigstens der schwenkbare Deckel (14) als eine Gehäusewand (13) des Reinigungsmitteldosiersystems (10) wenigstens abschnittsweise eine Wärmeisolierung aufweist.

2. Wasserführendes Haushaltsgerät nach einem der vorherigen Ansprüche,
**dadurch gekennzeichnet, dass** durch Schließen des Deckels (14) die Kartusche (50) in ihre endgültige Position gedrückt wird.

3. Wasserführendes Haushaltsgerät nach einem der vorherigen Ansprüche,
**gekennzeichnet durch** wenigstens eine Halteeinrichtung (16) zur Halterung und Lagefixierung wenigstens einer Kartusche (50).

4. Wasserführendes Haushaltsgerät nach Anspruch 3,
**dadurch gekennzeichnet, dass**
die Haltevorrichtung (16) durch wenigstens eine Aufnahme an dem Deckel (14) des Reinigungsmittelspenders (11) gebildet ist.

5. Wasserführendes Haushaltsgerät nach Anspruch 4,
**dadurch gekennzeichnet, dass**
die Aufnahme an dem Deckel (14) wenigstens zwei L-förmig ausgebildete Haltelaschen (17) aufweist.

6. Wasserführendes Haushaltsgerät nach einem der vorherigen Ansprüche,
**dadurch gekennzeichnet, dass**
der Reinigungsmittelspender (11) eine Positionierungseinrichtung für wenigstens eine Kartusche (50) aufweist.

7. Wasserführendes Haushaltsgerät nach einem der vorherigen Ansprüche,
**dadurch gekennzeichnet, dass**
die Wärmeisolierung durch ein Gasvolumen gebildet ist.

8. Wasserführendes Haushaltsgerät nach einem der Ansprüche 1 bis 6,
**dadurch gekennzeichnet, dass**
die Wärmeisolierung aus einem Feststoff oder einer Flüssigkeit gebildet ist.

9. Wasserführendes Haushaltsgerät nach einem der vorherigen Ansprüche,
**gekennzeichnet**
**durch** eine Wärmeisolierungen aus einer Kombination verschiedener Materialien, die in Wärmeausbreitungsrichtung hintereinander angeordnet sind.

10. Wasserführendes Haushaltsgerät nach einem der vorherigen Ansprüche,
**dadurch gekennzeichnet, dass**
an dem Reinigungsmittelspender (11) wenigstens ein Auslass (19a, ..., 19e) vorgesehen ist.

11. Wasserführendes Haushaltsgerät nach Anspruch 10,
**dadurch gekennzeichnet, dass**
der wenigstens eine Auslass (19a, ..., 19e) an einem Gehäuseabschnitt des Reinigungsmittelspenders (11) angeordnet ist, der in Schwerkraftrichtung unterhalb des Aufnahmeraums (15) angeordnet ist.

12. Wasserführendes Haushaltsgerät nach einem der Ansprüche 10 oder 11,
**dadurch gekennzeichnet, dass**
eine Mehrzahl an Auslässen (19a, ..., 19e) vorgesehen ist, die der Anzahl der in wenigstens einer Kartusche (50) bevorrateten Reinigungsmitteln entspricht.

13. Wasserführendes Haushaltsgerät nach Anspruch 12,
**gekennzeichnet, durch**
eine der Mehrzahl der Auslässe (19a, ..., 19e) entsprechende Anzahl von Dosierkammern (20a, ..., 20e).

14. Wasserführendes Haushaltsgerät nach Anspruch 13,
**dadurch gekennzeichnet, dass**
zumindest ein Auslass (19a, ..., 19e) des Reinigungsmitteldosiersystems (10) in eine der Dosierkammern (20a, ..., 20e) mündet.

15. Wasserführendes Haushaltsgerät nach einem der vorherigen Ansprüche,
**gekennzeichnet durch**
eine Fördereinrichtung, mit der wenigstens ein Reinigungsmittel aus der wenigstens einen Kartusche (50) förderbar ist.

16. Wasserführendes Haushaltsgerät nach Anspruch 15,
**dadurch gekennzeichnet, dass**
die Fördereinrichtung in der Dosierkammer (20a, ..., 20e) angeordnet ist.

17. Wasserführendes Haushaltsgerät nach einem der vorherigen Ansprüche,
**dadurch gekennzeichnet, dass**
wenigstens eine Pumpe zur Dosierung des wenigstens einen Reinigungsmittels vorgesehen ist.

18. Wasserführendes Haushaltsgerät nach einem der Ansprüche 1 bis 16
**dadurch gekennzeichnet, dass**
die Abgabe des wenigstens einen Reinigungsmittels schwerkraftbedingt erfolgt

19. Wasserführendes Haushaltsgerät nach einem der vorherigen Ansprüche,
**dadurch gekennzeichnet, dass**
das wasserführende Haushaltsgerät zur Dosierung über Festlegung einer Auslaufzeit ausgebildet ist.

20. Wasserführendes Haushaltsgerät nach einem der vorherigen Ansprüche,
**dadurch gekennzeichnet, dass**
das Reinigungsmitteldosiersystem (10) wenigstens eine weitere Kammer (27) für ein festes Reinigungsmittel aufweist.

21. Wasserführendes Haushaltsgerät nach einem der vorherigen Ansprüche,
**dadurch gekennzeichnet, dass**
das Reinigungsmitteldosiersystem (10) in einer Seitenwand (7) eines Spülraums der Geschirrspülmaschine angeordnet ist.

22. Wasserführendes Haushaltsgerät nach einem der vorherigen Ansprüche,
**dadurch gekennzeichnet, dass**
das Reinigungsmitteldosiersystem (10) zwischen einem Oberkorb (5) und einem Unterkorb (6) der Geschirrspülmaschine (1) angeordnet ist.

23. Wasserführendes Haushaltsgerät nach einem der vorherigen Ansprüche,
**dadurch gekennzeichnet, dass**
das Reinigungsmitteldosiersystem (10) an einer verschwenkbar ausgebildeten Tür (3) der Geschirrspülmaschine (1) angeordnet ist.

24. Wasserführendes Haushaltsgerät nach Anspruch 23,
**dadurch gekennzeichnet, dass**
das Reinigungsmitteldosiersystem derart an der Tür (3) ausgebildet ist, dass eine Bestückung des Reinigungsmittelspenders (11) mit einer Kartusche von einer Stirnseite (8) der Tür her erfolgt.

25. Wasserführendes Haushaltsgerät nach Anspruch 24,
**dadurch gekennzeichnet, dass**
die Bestückung des Reinigungsmittelspenders (11) im Bereich der Innentür oder im Bereich einer Blende der Tür (3) erfolgt.

26. Kartusche für eine wasserführendes Hauhaltsgerät, insbesondere eine Haushalts-Geschirrspülmaschine, die ein Reinigungsdosiermittelsystem, insbesondere nach einem der vorhergehenden Ansprüche umfasst,
**dadurch gekennzeichnet, dass**
wenigstens ein Abschnitt der Kartusche (50) abschnittsweise eine Wärmeisolierung aufweist.

27. Kartusche nach Anspruch 26,
**dadurch gekennzeichnet, dass**
die Wärmeisolierung durch ein in dem Abschnitt angeordnetes Gasvolumen gebildet ist.

28. Kartusche nach Anspruch 26 oder 27,
**dadurch gekennzeichnet, dass**
die Wärmeisolierung durch ein in dem Abschnitt angeordnetes Isolatormaterial gebildet ist.

29. Kartusche nach einem der Ansprüche 26 bis 28,
**dadurch gekennzeichnet, dass**
die Kartusche (50) wenigstens ein Reinigungsmittel enthält.

30. Kartusche nach Anspruch 29,
**dadurch gekennzeichnet, dass**
das Volumen des wenigstens einen Reinigungsmittels derart bemessen ist, dass wenigstens 20 und 40 Spülzyklen, bevorzugt 30 Spülzyklen durchführbar sind.

31. Kartusche nach einem der Ansprüche 26 bis 30,
**dadurch gekennzeichnet, dass**
die Kartusche (50) die wenigstens eine Fördereinrichtung aufweist.

32. Kartusche nach Anspruch 31,
**dadurch gekennzeichnet, dass**
eine der Anzahl der Reinigungsmittel entsprechende Anzahl an Fördereinrichtungen vorgesehen ist.

33. Kartusche nach einem der Ansprüche 26 bis 32,
**dadurch gekennzeichnet, dass**
das Kartuschengehäuse über eine mechanische Kodierung verfügt, die die Einbaulage in einem wasserführenden Haushaltsgerät definiert.

34. Kartusche nach einem der vorherigen Ansprüche,
**dadurch gekennzeichnet, dass**
das Kartuschegehäuse eine Längserstreckung entlang einer Hauptachse aufweist.

35. Kartusche nach Anspruch 34,
**dadurch gekennzeichnet, dass**
die Hauptachse länger als Nebenachsen des Kartuschegehäuses sind.

36. Kartusche nach Anspruch 34 oder 35,
**dadurch gekennzeichnet, dass**
die Kammern (51a,..., 51e) der Kartusche (50) entlang der Hauptachse nebeneinander angeordnet sind.

37. Kartusche nach einem der Ansprüche 26 bis 36,
**dadurch gekennzeichnet, dass**
die Kartusche mit wenigstens einem öffenbaren Verschluss (25a, ..., 25e) versehen ist, der beim Einsetzen in das Reinigungsmitteldosiersystem (10), insbesondere selbsttätig, öffenbar und beim Entnehmen der Kartusche aus dem Reinigungsmitteldosiersystem, insbesondere selbsttätig, schließbar ist.

38. Kartusche nach Anspruch 37,
**dadurch gekennzeichnet, dass**
der öffenbare Verschluss (25a, ..., 25e) durch eine Membran, eine Folie oder einen Elastomer gebildet ist.

39. Kartusche nach Anspruch 37 oder 38,
**dadurch gekennzeichnet, dass**
die Anzahl der Verschlüsse (25a, ..., 25e) der Anzahl der Kammern (50a, ..., 50e) entspricht.

40. Kartusche nach einem der Ansprüche 37 bis 39,
**dadurch gekennzeichnet, dass**
der Verschluss (25a, ..., 25e) beim Einsetzen der Kartsuche (50) in das Reinigungsmitteldosiersystem (10) korrespondierend zu einer Kanüle angeordnet ist, so dass der Verschluss (25a, ..., 25e) von dieser durchdrungen wird.

41. Kartusche nach Anspruch 40,
**dadurch gekennzeichnet, dass**
durch die Kanüle (21 a, ..., 21e) eine Verbindung zu der Dosierkammer hergestellt ist.

42. Kartusche nach einem der Ansprüche 26 bis 41,
**dadurch gekennzeichnet, dass**
wenigstens eine der Kammern (51a, ,51e) wenigstens eine der folgenden Inhaltstoffe aufweist: Enzyme, Bleichmittel, Bleichaktivatoren, Dispergier- und Komplexiermittel, Tenside, Alkaliträger und/oder Biozide.

43. Reinigungsmitteldosiersystem nach einem der vorherigen Ansprüche 1-25.

## Claims

1. Water-conducting domestic appliance, particularly household dishwasher, with a cleaning agent metering system (10) comprising a cleaning agent dispenser (11) with a receiving chamber (15) for reception of at least one cartridge (50), wherein the cartridge (50) is constructed for storage of at least one cleaning agent, **characterised in that** the cleaning agent dispenser (11) comprises a housing (12) with a lid (14) pivotably mounted thereon, wherein the cleaning agent metering system (10) is fixedly integrated in a component of the domestic appliance and at least the pivotable lid (14) as a housing wall (13) of the cleaning agent metering system (10) has a thermal insulation at least in a section.

2. Water-conducting domestic appliance according to the preceding claim, **characterised in that** the cartridge (50) is pressed into its final position by closing the lid (14).

3. Water-conducting domestic appliance according to one of the preceding claims, **characterised by** at least one holding device (16) for holding and positionally fixing at least one cartridge (50).

4. Water-conducting domestic appliance according to claim 3, **characterised in that** the holding device (16) is formed by at least one mount at the lid (14) of the cleaning agent dispenser (11).

5. Water-conducting domestic appliance according to claim 4, **characterised in that** the mount at the lid (14) has at least two retaining straps (17) of L-shaped construction.

6. Water-conducting domestic appliance according to any one of the preceding claims, **characterised in that** the cleaning agent dispenser (11) has a positioning device for at least one cartridge (50).

7. Water-conducting domestic appliance according to any one of the preceding claims, **characterised in that** the thermal insulation is formed by a gas volume.

8. Water-conducting domestic appliance according to any one of claims 1 to 6, **characterised in that** the thermal insulation is formed from a solid material or a liquid.

9. Water-conducting domestic appliance according to any one of the preceding claims, **characterised by** a thermal insulation consisting of a combination of different materials which are arranged one after the other in the direction of heat propagation.

10. Water-conducting domestic appliance according to any one of the preceding claims, **characterised in that** at least one outlet (19a, ..., 19e) is provided at the cleaning agent dispenser.

11. Water-conducting domestic appliance according to claim 10, **characterised in that** the at least one outlet (19a, ..., 19e) is arranged at a housing section of the cleaning agent dispenser (11) which is disposed below the receiving chamber (15) in the direction of gravitational force.

12. Water-conducting domestic appliance according to one of claims 10 and 11, **characterised in that** a plurality of outlets (19a, ..., 19e) is provided, which plurality corresponds with the number of cleaning agents stored in at least one cartridge (50).

13. Water-conducting domestic appliance according to claim 12, **characterised by** a number of metering chambers (20a, ..., 20e) corresponding with the plurality of outlets (19a, ..., 19e).

14. Water-conducting domestic appliance according to claim 13, **characterised in that** at least one outlet (19a, ..., 19e) of the cleaning agent metering system (10) opens into one of the metering chambers (20a, ..., 20e).

15. Water-conducting domestic appliance according to any one of the preceding claims, **characterised by** a conveying device by which at least one cleaning agent can be conveyed out of the at least one cartridge (50).

16. Water-conducting domestic appliance according to claim 15, **characterised in that** the conveying direction is arranged in the metering chamber (20a, ..., 20e).

17. Water-conducting domestic appliance according to any one of the preceding claims, **characterised in that** at least one pump for metering the at least one cleaning agent is provided.

18. Water-conducting domestic appliance according to any one of claims 1 to 16, **characterised in that** the delivery of the at least one cleaning agent takes place under gravitational force.

19. Water-conducting domestic appliance according to any one of the preceding claims, **characterised in that** the water-conducting domestic appliance is constructed for metering by way of determination of a run-out time.

20. Water-conducting domestic appliance according to any one of the preceding claims, **characterised in that** the cleaning agent metering system (10) has at least one further chamber (27) for a solid cleaning agent.

21. Water-conducting domestic appliance according to any one of the preceding claims, **characterised in that** the cleaning agent metering system (10) is arranged in a side wall (7) of a rinsing chamber of the dishwasher.

22. Water-conducting domestic appliance according to any one of the preceding claims, **characterised in that** the cleaning agent metering system (10) is arranged between an upper basket (5) and a lower basket (6) of the dishwasher (1).

23. Water-conducting domestic appliance according to any one of the preceding claims, **characterised in that** cleaning agent metering system (10) is arranged at a pivotably constructed door (3) of the dishwasher (1).

24. Water-conducting domestic appliance according to claim 23, **characterised in that** the cleaning agent metering system is so constructed at the door (3) that loading of the cleaning agent dispenser (11) with a cartridge takes place from an end face (8) of the door.

25. Water-conducting domestic appliance according to claim 24, **characterised in that** the loading of the cleaning agent dispenser (11) takes place in the region of the inner door or in the region of a face panel of the door (3).

26. Cartridge for a water-conducting domestic appliance, particularly a domestic dishwasher, which comprises a cleaning agent metering system particularly according to any one of the preceding claims, **characterised in that** at least a section of the cartridge (50) has a thermal insulation at least in a section.

27. Cartridge according to claim 26, **characterised in that** the thermal insulation is formed by a gas volume arranged in the section.

28. Cartridge according to claim 26 or 27, **characterised in that** the thermal insulation is formed by an insulating material arranged in the section.

29. Cartridge according to any one of claims 26 to 28, **characterised in that** the cartridge (50) contains at least one cleaning agent.

30. Cartridge according to claim 29, **characterised in that** the volume of the at least cleaning agent is so dimensioned that at least 20 and 40 rinsing cycles, preferably 30 rinsing cycles, can be performed.

31. Cartridge according to any one of claims 26 to 30, **characterised in that** the cartridge (50) has at least one conveying direction.

32. Cartridge according to claim 31, **characterised in that** a number of conveying devices corresponding with the number of cleaning agents is provided.

33. Cartridge according to any one of claims 26 to 32, **characterised in that** the cartridge housing a mechanical coding defining the position of installation in a water-conducting domestic appliance.

34. Cartridge according to any one of the preceding claims, **characterised in that** the cartridge housing has a length direction along a main axis.

35. Cartridge according to claim 34, **characterised in that** the main axis is longer than subordinate axes of the cartridge housing.

36. Cartridge according to claim 34 or 35, **characterised in that** the chambers (51 a, ... , 5e) of the cartridge (50) are arranged adjacent to one another along the main axis.

37. Cartridge according to any one of claims 26 to 36, **characterised in that** the cartridge is provided with at least one openable closure (25a, ..., 25e) which on insertion into the cleaning agent metering system (10) is openable, particularly automatically, and on removal of the cartridge from the cleaning agent metering system is closable, particularly automatically.

38. Cartridge according to claim 37, **characterised in that** the openable closure (25a, ..., 25e) is formed by a membrane, a foil or an elastomer.

39. Cartridge according to claim 37 or 38, **characterised in that** the number of closures (25a, ..., 25e) corresponds with the number of chambers (50a, ..., 50e).

40. Cartridge according to any one of claims 37 to 39, **characterised in that** the closure (25a, ..., 25e) on insertion of the cartridge (50) into the cleaning agent metering system (10) is arranged to correspond with a cannula so that the closure (25a, ..., 25e) is penetrated by this.

41. Cartridge according to claim 40, **characterised in that** a connection with the metering chamber is produced by the cannula (21 a, ..., 21e).

42. Cartridge according to any one of claims 26 to 41, **characterised in that** at least one of the chambers (51, ... , 51e) comprises at least one of the following active ingredients: enzymes, bleaching agents, bleach activators, dispersants, complexing agents, surfactants, alkali carriers and/or biocides.

43. Cleaning agent metering system according to any one of the preceding claims 1 to 25.

## Revendications

1. Appareil électroménager à circulation d'eau, notamment lave-vaisselle à usage domestique, comprenant un système de dosage de produit de nettoyage (10) qui comporte un distributeur de produit de nettoyage (11) pourvu d'un espace de logement (15) pour loger l'au moins une cartouche (50), la cartouche (50) étant exécutée pour la mise en réserve d'au moins un produit de nettoyage,
**caractérisé en ce que**
le distributeur de produit de nettoyage (11) comprend un boîtier (12) avec un couvercle (14) monté de manière pivotante sur le boîtier, le système de dosage de produit de nettoyage (10) étant intégré fixement dans un élément de construction de l'appareil électroménager et au moins le couvercle pivotant (14) étant, en tant que paroi de boîtier (13) du système de dosage de produit de nettoyage (10), pourvu au moins par endroits d'une isolation calorifuge.

2. Appareil électroménager à circulation d'eau selon l'une des revendications précédentes, **caractérisé en ce que** la cartouche (50) est pressée dans sa position définitive par la fermeture du couvercle (14).

3. Appareil électroménager à circulation d'eau selon l'une des revendications précédentes, **caractérisé par** au moins un dispositif de maintien (16) pour supporter et fixer en place au moins une cartouche (50).

4. Appareil électroménager à circulation d'eau selon la revendication 3, **caractérisé en ce que** le dispositif de maintien (16) est formé par au moins un logement au niveau du couvercle (14) du distributeur de produit de nettoyage (11).

5. Appareil électroménager à circulation d'eau selon la revendication 4, **caractérisé en ce que** le logement au niveau du couvercle (14) est pourvu d'au moins deux brides de maintien (17) exécutées en forme de L.

6. Appareil électroménager à circulation d'eau selon l'une des revendications précédentes, **caractérisé en ce que** le distributeur de produit de nettoyage (11) comprend un dispositif de positionnement pour au moins une cartouche (50).

7. Appareil électroménager à circulation d'eau selon l'une des revendications précédentes, **caractérisé en ce que** l'isolation calorifuge est formée par un volume de gaz.

8. Appareil électroménager à circulation d'eau selon l'une des revendications 1 à 6, **caractérisé en ce que** l'isolation calorifuge est formée d'une matière solide ou d'un liquide.

9. Appareil électroménager à circulation d'eau selon l'une des revendications précédentes, **caractérisé par** une isolation calorifuge formée d'une combinaison de différents matériaux qui sont disposés les uns derrière les autres dans la direction de la propagation de la chaleur.

10. Appareil électroménager à circulation d'eau selon l'une des revendications précédentes, **caractérisé en ce qu'**au moins une sortie (19a, ..., 19e) est prévue au niveau du distributeur de produit de nettoyage (11).

11. Appareil électroménager à circulation d'eau selon la revendication 10, **caractérisé en ce que** l'au moins une sortie (19a, ..., 19e) est située sur une portion de boîtier du distributeur de produit de nettoyage (11) qui est située en dessous de l'espace de logement (15) dans la direction de la force de gravité.

12. Appareil électroménager à circulation d'eau selon l'une des revendications 10 ou 11, **caractérisé en ce que** l'on prévoit une pluralité de sorties (19a, ..., 19e) qui correspond au nombre des produits de nettoyage mis en réserve dans au moins une cartouche (50).

13. Appareil électroménager à circulation d'eau selon la revendication 12, **caractérisé par** un nombre de chambres de dosage (20a, ..., 20e) correspondant à la pluralité des sorties (19a, ..., 19e).

14. Appareil électroménager à circulation d'eau selon la revendication 13, **caractérisé en ce qu'**au moins une sortie (19a, ..., 19e) du système de dosage de produit de nettoyage (10) débouche dans une des chambres de dosage (20a, ..., 20e).

15. Appareil électroménager à circulation d'eau selon l'une des revendications précédentes, **caractérisé par** un dispositif de transport grâce auquel au moins un produit de nettoyage peut être transporté depuis l'au moins une cartouche (50).

16. Appareil électroménager à circulation d'eau selon la revendication 15, **caractérisé en ce que** le dispositif de transport est situé dans la chambre de dosage (20a, ..., 20e).

17. Appareil électroménager à circulation d'eau selon l'une des revendications précédentes, **caractérisé en ce qu'**au moins une pompe est prévue pour le dosage de l'au moins un produit de nettoyage.

18. Appareil électroménager à circulation d'eau selon l'une des revendications 1 à 16, **caractérisé en ce que** la distribution de l'au moins un produit de nettoyage se fait sous l'effet de la force de gravité.

19. Appareil électroménager à circulation d'eau selon l'une des revendications précédentes, **caractérisé en ce que** l'appareil électroménager à circulation d'eau est exécuté pour procéder au dosage en fixant un temps d'écoulement.

20. Appareil électroménager à circulation d'eau selon l'une des revendications précédentes, **caractérisé en ce que** le système de dosage de produit de nettoyage (10) comprend au moins une chambre supplémentaire (27) pour un produit de nettoyage solide.

21. Appareil électroménager à circulation d'eau selon l'une des revendications précédentes, **caractérisé en ce que** le système de dosage de produit de nettoyage (10) est situé dans une paroi latérale (7) d'une espace de lavage du lave-vaisselle.

22. Appareil électroménager à circulation d'eau selon l'une des revendications précédentes, **caractérisé en ce que** le système de dosage de produit de lavage (10) est situé entre un panier supérieur (5) et un panier inférieur (6) du lave-vaisselle (1).

23. Appareil électroménager à circulation d'eau selon l'une des revendications précédentes, **caractérisé en ce que** le système de dosage de produit de nettoyage (10) est situé sur une porte (3) du lave-vaisselle (1) exécutée de manière à pouvoir pivoter.

24. Appareil électroménager à circulation d'eau selon la revendication 23, **caractérisé en ce que** le système de dosage de produit de lavage est exécuté sur la porte (3) de telle sorte qu'un chargement du distributeur de produit de lavage (11) avec une cartouche s'effectue par un côté frontal (8) de la porte.

25. Appareil électroménager à circulation d'eau selon la revendication 24, **caractérisé en ce que** le chargement du distributeur de produit de nettoyage (11) s'effectue dans la zone de la porte intérieure ou dans la zone d'un panneau de la porte (3).

26. Cartouche pour un appareil électroménager à circulation d'eau, notamment un lave-vaisselle à usage domestique, qui comprend un système de dosage de produit de nettoyage, notamment selon l'une des revendications précédentes, **caractérisée en ce qu'**au moins une section de la cartouche (50) est pourvue d'une isolation calorifuge par endroits.

27. Cartouche selon la revendication 26, **caractérisée en ce que** l'isolation calorifuge est formée par un volume de gaz situé dans la section.

28. Cartouche selon la revendication 26 ou 27, **caractérisée en ce que** l'isolation calorifuge est formée par un matériau isolant situé dans la section.

29. Cartouche selon l'une des revendications 26 à 28, **caractérisée en ce que** la cartouche (50) contient au moins un produit de nettoyage.

30. Cartouche selon la revendication 29, **caractérisée en ce que** le volume du au moins un produit de nettoyage est dimensionné de manière à ce qu'au moins 20 et 40 cycles de lavage, de préférence 30 cycles de lavage, puissent être exécutés.

31. Cartouche selon l'une des revendications 26 à 30, **caractérisée en ce que** la cartouche (50) comprend l'au moins un dispositif de transport.

32. Cartouche selon la revendication 31, **caractérisée en ce qu'**un nombre de dispositifs de transport correspondant au nombre des produits de nettoyage est prévu.

33. Cartouche selon l'une des revendication 26 à 32, **caractérisée en ce que** le boîtier de la cartouche dispose d'un codage mécanique qui définit la position d'installation dans un appareil électroménager à circulation d'eau.

34. Cartouche selon l'une des revendications précédentes, **caractérisée en ce que** le boîtier de la cartouche présente une étendue longitudinale le long d'un axe principal.

35. Cartouche selon la revendication 34, **caractérisée en ce que** l'axe principal est plus long que des axes secondaires du boîtier de la cartouche.

36. Cartouche selon la revendication 34 ou 35, **caractérisée en ce que** les chambres (51a, ... , 51e) de la cartouche (50) sont disposées les unes à côté des autres le long de l'axe principal.

37. Cartouche selon l'une des revendications 26 à 36, **caractérisée en ce que** la cartouche est pourvue d'au moins une fermeture ouvrable (25a, ..., 25e) qui peut s'ouvrir, notamment de manière automatique, lors de l'insertion dans le système de dosage de produit de nettoyage (10) et qui peut se fermer, notamment de manière automatique, lors du retrait de la cartouche du système de dosage de produit de nettoyage.

38. Cartouche selon la revendication 37, **caractérisée en ce que** la fermeture ouvrable (25a, ..., 25e) est formée par une membrane, une pellicule ou un élastomère.

39. Cartouche selon la revendication 37 ou 38, **caractérisée en ce que** le nombre des fermetures (25a, ..., 25e) correspond au nombre des chambres (50a, ..., 50e).

40. Cartouche selon l'une des revendications 37 à 39, **caractérisée en ce que** la fermeture (25a, ..., 25e) est disposée de manière à correspondre à une canule, lors de l'insertion de la cartouche (50) dans le système de dosage de produit de nettoyage (10), de sorte que la fermeture (25a, ..., 25e) est traversée par la canule.

41. Cartouche selon la revendication 40, **caractérisée en ce qu'**une liaison vers la chambre de dosage est établie au moyen de la canule (21 a, ... , 21 e).

42. Cartouche selon l'une des revendications 26 à 41, **caractérisée en ce qu'**au moins une des chambres (51 a, ... , 51 e) présente au moins l'une des substances suivantes : enzymes, agents de blanchiment, activateurs de blanchiment, agents de dispersion et agents complexants, tensioactifs, porteurs alcalins et/ou biocides.

43. Système de dosage de produit de nettoyage selon l'une des revendications précédentes 1-25.
